# EUROPÄISCHE PATENTSCHRIFT

(11) **EP 1 598 304 B1**
(45) Veröffentlichungstag und Bekanntmachung des Hinweises auf die Patenterteilung: **14.05.2008**
(21) Anmeldenummer: 05008436.7
(22) Anmeldetag: 19.04.2005
(51) Int. Cl.: B66C 23/78, B60S 9/04

(54) **Schwenkfuss für eine Stütz- oder Hubeinrichtung**
Swivel foot for a ground support device or a lifting device
Pied pivotant pour un support au sol ou pour un dispositif de levage

(30) Priorität: 19.05.2004 DE 102004025349
(43) Veröffentlichungstag der Anmeldung: 23.11.2005
(73) Patentinhaber: Haacon Hebetechnik GmbH, 97896 Freudenberg/Main (DE)
(72) Erfinder: Birkholz, Holger, 97906 Faulbach (DE); Miltenberger, Robert, 63928 Eichenbühl (DE); Natterer, Ralf, 63853 Mömlingen (DE); Lazarus, Konrad, 97896 Freudenberg (DE)
(74) Vertreter: Tappe, Hartmut

(56) Entgegenhaltungen:
- EP-A- 0 234 423
- US-A- 4 473 239
- US-A- 5 340 143

## Beschreibung

Die vorliegende Erfindung betrifft einen Schwenkfuß zur Abstützung einer Stütz- oder Hubeinrichtung, insbesondere einer Sattelstütze oder dergleichen, mit einer Schwenklagereinrichtung zur Verbindung mit einem Stützrohr der Stütz- oder Hubeinrichtung und einer Fußplatte zur Abstützung auf einem Untergrund.

Schwenkfüße der eingangs genannten Art ermöglichen aufgrund ihrer um eine Schwenkachse verschwenkbaren Ausführung eine Abstützung von Gegenständen, wie beispielsweise Containern oder Sattelaufliegern, auch auf unebenem oder schrägem Untergrund. Je nach den gegebenen Lagerbedingungen für die Container bzw. Sattelauflieger kann es sich auch als notwendig erweisen, diese nachträglich, also nach Abkopplung von einem manövrierfähigen Zugfahrzeug zumindest geringfügig in ihrer Position verändern zu können. Hierzu sind Stütz- oder Hubeinrichtungen bekannt, die über Rollen- oder Radsätze verfügen, die ein Verschieben der mit entsprechenden Stütz- oder Hubeinrichtungen versehenen Container oder Sattelauflieger ermöglichen, ohne dass hierzu ein Zugfahrzeug zum Einsatz kommen müsste.

Je nach Ausführung der bekannten Rollen- oder Radsätze sind diese jedoch in ihrer Tragfähigkeit begrenzt oder weisen eine für hohe Traglasten ausgelegt und entsprechend aufwendige und teure Konstruktion auf.

Aus der EP 0234423 A2 ist ein Schwenkfuß zur Abstützung einer Stütz- oder Hubeinrichtung mit einer Schwenklagereinrichtung zur Verbindung mit einem Stützrohr der Stütz- oder Hubeinrichtung bekannt. Der Schwenkfuß weist eine Fußplatte zur Abstützung auf einem Untergrund auf, wobei zwischen der Fußplatte und der Schwenklagereinrichtung eine Gleiteinrichtung ausgebildet ist, welche eine Ausgleichsbewegung des Stützrohrs auf der Fußplatte innerhalb eines definierten Bewegungsbereichs ermöglicht.

Aufgabe der vorliegenden Erfindung ist es, einen Schwenkfuß vorzuschlagen, der bei einem möglichst einfachen und somit kostengünstigen Aufbau eine Verschiebbarkeit der mit dem Schwenkfuß ausgerüsteten Stütz- oder Hubeinrichtung bei gleichzeitig hoher zulässiger Traglast ermöglicht.

Diese Aufgabe wird durch einen Schwenkfuß mit den Merkmalen des Anspruchs 1 gelöst.

Bei dem erfindungsgemäßen Schwenkfuß ist die dem Untergrund zugewandte Unterseite der Fußplatte als Gleitfläche für eine auf der Unterseite angeordnete Gleiteinrichtung ausgebildet ist, wobei der Schwenkfuß relativ zum Untergrund bewegbar ist.

Durch den erfindungsgemäßen Aufbau wird somit die Ausbildung eines Schwenkfußes mit einer zur Aufnahme hoher Traglasten besonders geeigneten Fußplatte bei gleichzeitig auf dem Untergrund bzw. der Stützfläche verschiebbarer Ausgestaltung des Schwenkfußes möglich.

Wenn darüber hinaus die Gleiteinrichtung aus einem gegen die Unterseite der Fußplatte anliegenden und auf dieser verschiebbar angeordneten Bandeinrichtung gebildet ist, wird einerseits eine besonders niedrige Bauhöhe des Schwenkfußes ermöglicht, die eine entsprechend hohe effektive Hubhöhe der Stütz- oder Hubeinrichtung ermöglicht. Zum anderen ermöglicht die Bandeinrichtung eine flächige Kraftaufnahme und Krafteinleitung in die Stützfläche, so dass hohe Stütz- oder Traglasten ermöglicht werden ohne die Gefahr der Zerstörung der Gleiteinrichtung.

Wenn die Bandeinrichtung endlos ausgebildet ist und über zumindest zwei Umlenkeinrichtungen geführt ist, lassen sich trotz einfachstem konstruktiven Aufbau große Verschiebewege auf der Stützfläche realisieren.

Bei einer möglichen Ausführungsform können die Umlenkeinrichtungen an der Fußplatte ausgebildet sein.

Gemäß einer alternativen Ausführungsform können die Umlenkeinrichtungen unabhängig von der Fußplatte ausgebildet sein, so dass die Fußplatte durch Reduktion auf ihre flächige Kraftübertragungsfunktion sehr einfach ausgebildet sein kann und andererseits die Umlenkeinrichtung sowohl hinsichtlich ihrer Relativanordnung zur Fußplatte als auch ihrer Funktion unabhängig von der Fußplatte optimiert ausgelegt werden kann.

Eine besonders kompakte und gleichzeitig funktionssichere Ausführung des Schwenkfußes wird möglich, wenn die Fußplatte ein Gehäuseunterteil eines Gehäuses zur Aufnahme der Bandeinrichtung ist.

Ein insgesamt einfacher konstruktiver und somit kostengünstiger Aufbau des Schwenkfußes wird möglich, wenn die Fußplatte mit einem Gehäuseoberteil versehen ist, das in einem Verbindungsbereich zum Anschluss an das Stützrohr als Gegenlagerfläche zu einer am Stützrohr ausgebildeten Lagerfläche ausgebildet ist.

Um eine freie räumliche Winkelbeweglichkeit des Schwenkfußes gegenüber dem Stützrohr zu ermöglichen, erweist es sich als vorteilhaft, die am Gehäuseoberteil ausgebildete Gegenlagerfläche als Teilfläche einer Kugeloberfläche auszubilden.

Um trotz der verschiebbaren Ausgestaltung des Schwenkfußes bei Bedarf eine sichere definierte Anordnung eines mit entsprechend ausgestatten Stütz- oder Hubeinrichtungen versehenen Containers oder Sattelaufliegers zu ermöglichen, ist es vorteilhaft, die Bandeinrichtung mit einer Brems- und/oder Anschlageinrichtung zur Hemmung oder Verhinderung einer Bandbewegung zu versehen.

Nachfolgend wird eine bevorzugte Ausführungsform des Schwenkfußes anhand der Zeichnung näher erläutert.

Es zeigen:
- **Fig. 1**: eine Sattelstütze mit einem am unteren Ende eines Stützrohres angeordneten Schwenkfuß;
- **Fig. 2**: den in **Fig. 1** dargestellten Schwenkfuß in vergrößerter Darstellung;
- **Fig. 3**: den in **Fig. 2** dargestellten Schwenkfuß in Seitenansicht und Schnittdarstellung.

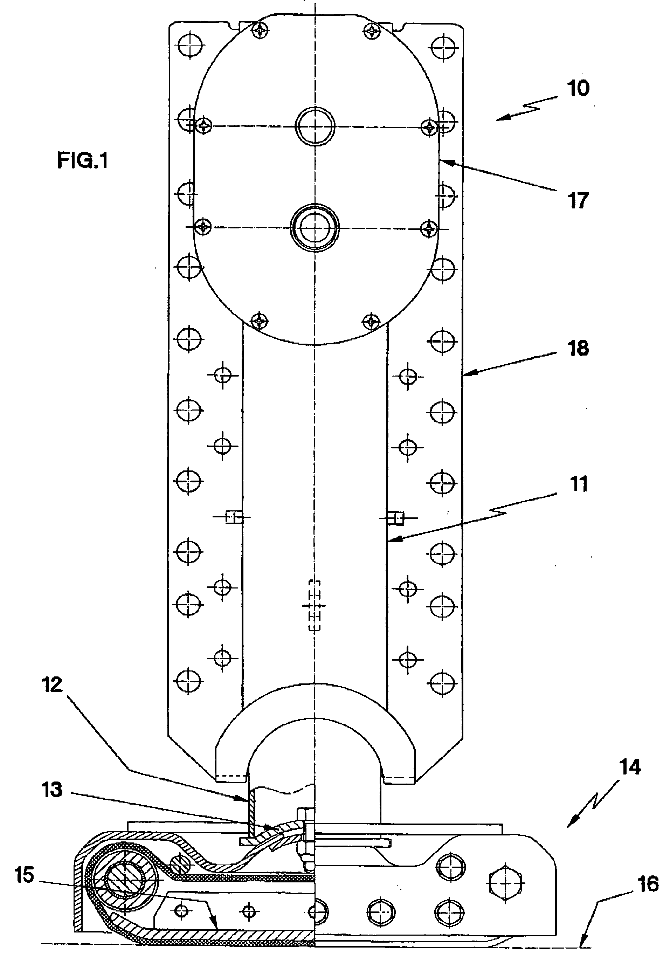

**Fig. 1** zeigt eine Sattelstütze 10 mit einem Schaftrohr 11, das gegenüber einem im Innern des Schaftrohres 11 aufgenommenen Stützrohr 12 verfahrbar ist. Das Stützrohr 12 stützt sich an seinem unteren Ende über eine Schwenklagereinrichtung 13 auf einem Schwenkfuß 14 ab, der sich seinerseits über eine Fußplatte 15 auf einem Untergrund 16 abstützt.

Am Schaftrohr 11 ist ein Hubgetriebe 17 angeordnet, das mit einer hier nicht näher dargestellten und im Innern des Stützrohres 12 angeordneten Hubspindel zusammenwirkt, die ein Verfahren des Schaftrohres 11 gegenüber dem Stützrohr 12 ermöglicht. Das Schaftrohr 11 weist rückwärtig eine Montageplatte 18 auf, die zum mechanischen Anschluss des Schaftrohres 11 an einem mittels der Sattelstütze 10 anzuhebenden Gegenstand, also beispielsweise einem Fahrzeugchassis eines Sattelaufliegers, dient, um die vom Schaftrohr 11 gegenüber dem Stützrohr 12 ausgeführte Hubbewegung auf das Fahrzeugchassis zu übertragen.

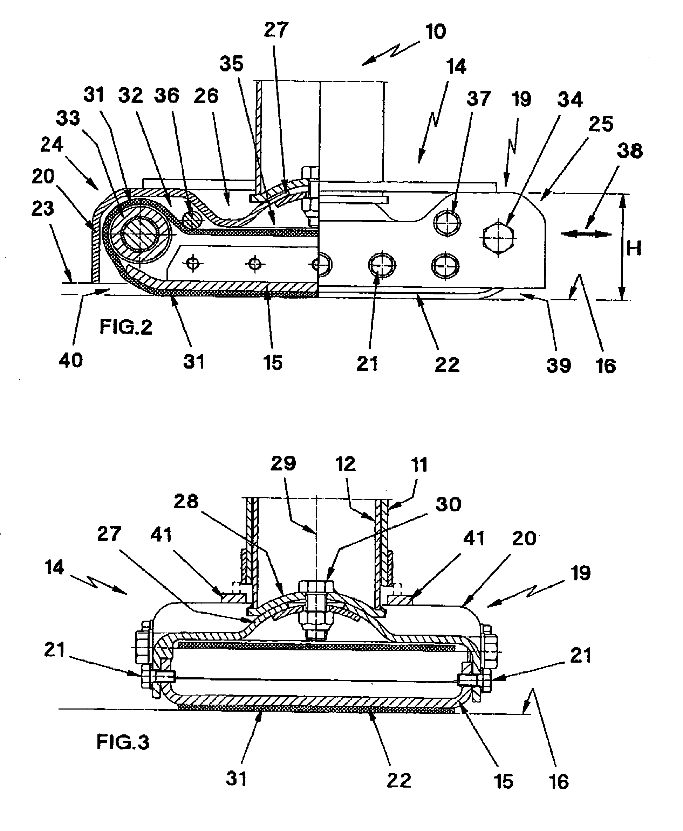

Wie insbesondere aus der vergrößerten Darstellung des Schwenkfußes 14 in **Fig. 2** zu entnehmen ist, weist dieser ein Gehäuse 19 mit einem Gehäuseoberteil 20 und einem durch die Fußplatte 15 gebildeten Gehäuseunterteil auf. Das Gehäuseoberteil 20 ist, wie im Übrigen auch aus **Fig. 3** zu ersehen ist, kraftschlüssig, unter Verwendung von als Schraubenverbindungen 21 ausgebildeten Verbindungseinrichtungen mit der Fußplatte 15 verbunden, derart, dass die Fußplatte 15 mit ihrer Unterseite 22 zumindest geringfügig aus einer Öffnungsebene 23 des haubenförmig ausgebildeten Gehäuseoberteils 20 hervorragt.

Wie eine Zusammenschau der **Fig. 2** und **3** deutlich macht, weist das Gehäuseoberteil 20 gegenüber seinen längsseitigen Endbereichen 24, 25 ein abgesenktes Gehäusemittelteil 26 auf, das mit einer sphärisch erhaben ausgebildeten Gegenlagerfläche 27 versehen ist, die komplementär zu einer Lagerfläche 28 ausgebildet ist, welche gleichzeitig einen unteren Abschluss des Stützrohres 12 bildet.

Die am Gehäuseoberteil 20 oberseitig ausgebildete Gegenlagerfläche 27 ist zur Ausbildung der Schwenklagereinrichtung 13 über eine koaxial zu einer Mittelachse 29 des Stützrohres 12 angeordnete Bolzenverbindung 30 mit der Lagerfläche 28 verschwenkbar verbunden.

Im Gehäuse 19 ist eine hier umlaufend und endlos ausgebildete Bandeinrichtung 31 vorgesehen, die auf einer Bandführungseinrichtung 32 angeordnet ist. Als Material für die Bandeinrichtung 31 eignet sich beispielsweise mit verstärkenden Struktureinlagen, wie beispielsweise Gewebeeinlagen, versehenes elastisches Material, wie es als Material für Transportbänder oder dergleichen eingesetzt wird.

Wie insbesondere aus **Fig. 2** zu ersehen ist, ist die Fußplatte 15 neben zwei jeweils im Endbereich 24, 25 des Gehäuseoberteils 20 vorgesehenen Umlenkrollen 33, 34 ein wesentlicher Bestandteil der Bandführungseinrichtung 32. Bei Rotation der Umlenkrollen 33, 34 wird die Bandeinrichtung 31 auf der Unterseite 22 der Fußplatte 15 längs geführt, so dass die Fußplatte 15 einerseits zur Krafteinleitung in den Untergrund 16 und andererseits als Bandführungseinrichtung dient. Neben den Umlenkrollen 33, 34 sind bei dem in **Fig. 2** dargestellten Ausführungsbeispiel zwei im Bereich eines oberhalb der Fußplatte 15 angeordneten Obertrums 35 der Bandeinrichtung 31 weitere Umlenkeinrichtungen 36, 37 vorgesehen, die bei entsprechender Ausbildung, also beispielsweise in Kombination mit einer in Richtung auf die Fußplatte 15 wirkenden, hier nicht dargestellten Zustelleinrichtung, auch als Bandspannelemente dienen können.

Wie durch den Doppelpfeil 38 in **Fig. 2** angedeutet, ermöglicht die Anordnung der Bandeinrichtung 31 auf der Bandführungseinrichtung 32 in Folge einer relativen Gleitbewegung zwischen der Bandeinrichtung 31 und der Unterseite 22 der Fußplatte 15 eine Relativverschiebung der gesamten Sattelstütze 10 auf dem Untergrund 16.

Aufgrund der im Wesentlichen geschlossenen Ausbildung des Gehäuses 19, das durch Anordnung der Fußplatte 15 in der Öffnungsebene 23 lediglich zwei Durchführungsschlitze 39, 40 zur Durchführung der Bandeinrichtung als Gehäuseöffnungen aufweist, ergibt sich eine im Wesentlichen nach außen hin abgeschlossene, geschützte Aufnahme für die Bandeinrichtung 31.

Weiterhin zeigt eine Zusammenschau der **Fig. 2** und **3** deutlich, dass bezogen auf die ebene Erstreckung des Schwenkfußes 14 dessen Höhe H relativ gering ausfällt, so dass bei definierter maximaler Bauhöhe der Sattelstütze 10 ein großer Hubverstellbereich ermöglicht wird. Dabei trägt zu der geringen Bauhöhe H insbesondere die gegenüber den Endbereichen 24, 25 des Gehäuseoberteils 20 abgesenkte Anordnung des Gehäusemittelteils 26 bei.

Wie ferner aus **Fig. 3** zu ersehen, ist das Gehäuseoberteil 20 auf seiner Oberseite mit Anschlagleisten 41 versehen, die bei vollständig in das Schaftrohr 11 eingefahrenem Stützrohr 12 eine definierte, bodenparallele Relativausrichtung des Schwenkfußes 14 gegenüber dem Stützrohr 12 ermöglichen. Wenn die Anschlagleisten 41 nicht nur als Vertikalanschlag sondern auch als Horizontalanschlag ausgebildet sind, wie in **Fig. 3** durch den gestrichelten Linienverlauf angedeutet, wird auch eine Ausrichtung des Schwenkfußes 14 in Fahrzeuglängsrichtung ermöglicht.

## Patentansprüche

1. Schwenkfuß zur Abstützung einer Stütz- oder Hubeinrichtung (10), insbesondere eine Sattelstütze oder dergleichen, mit einer Schwenklagereinrichtung (13) zur Verbindung mit einem Stützrohr (12) der Stütz- oder Hubeinrichtung und einer Fußplatte (15) zur Abstützung auf einem Untergrund (16),
**dadurch gekennzeichnet,**
**dass** die dem Untergrund zugewandte Unterseite (22) der Fußplatte als Gleitfläche für eine auf der Unterseite angeordnete Gleiteinrichtung ausgebildet ist, wobei der SchwcnkfuLi relativ zum Untergrund bewegbar ist.

2. Schwenkfuß nach Anspruch 1,
**dadurch gekennzeichnet,**
**dass** die Gleiteinrichtung aus einer gegen die Unterseite (22) der Fußplatte (15) anliegenden und auf dieser verschiebbar angeordneten Bandeinrichtung (31) gebildet ist.

3. Schwenkfuß nach Anspruch 2,
**dadurch gekennzeichnet,**
**dass** die Bandeinrichtung (31) endlos ausgebildet ist und über zumindest zwei Umlenkeinrichtungen (33, 34; 36, 37) geführt ist.

4. Schwenkfuß nach Anspruch 3,
**dadurch gekennzeichnet,**
**dass** die Umlenkeinrichtungen an der Fußplatte ausgebildet sind.

5. Schwenkfuß nach Anspruch 3,
**dadurch gekennzeichnet,**
**dass** die Umlenkeinrichtungen (33, 34; 36, 37) unabhängig von der Fußplatte (15) ausgebildet sind.

6. Schwenkfuß nach einem der vorangehenden Ansprüche 2 bis 5,
**dadurch gekennzeichnet,**
**dass** die Bandeinrichtung mit einer Brems- und/oder Anschlageinrichtung zur Hemmung oder Verhinderung einer Badbewegung versehen ist.

7. Schwenkfuß nach einem der vorangehenden Ansprüche 2 bis 6,
**dadurch gekennzeichnet,**
**dass** die Fußplatte (15) ein Gehäuseunterteil eines Gehäuses (19) zur Aufnahme der Bandeinrichtung (31) bildet.

8. Schwenkfuß nach Anspruch 7,
**dadurch gekennzeichnet,**
**dass** die Fußplatte (15) mit einem Gehäuseoberteil (20) versehen ist, das in einem Verbindungsbereich zum Anschluss an das Stützrohr (12) als Gegenlagerfläche (27) zu einer am Stützrohr komplementär ausgebildeten Lagerfläche (28) ausgebildet ist.

9. Schwenkfuß nach Anspruch 8,
**dadurch gekennzeichnet,**
**dass** die am Gehäuseoberteil (20) ausgebildete Gegenlagerfläche (27) als Teilfläche einer Kugeloberfläche ausgebildet ist.

## Claims

1. A swivel foot to support a supporting or lifting device (10), particularly a trailer support or the like, with a swivel bearing (13) for connection to a support tube (12) of the supporting or lifting device and with a foot plate (15) for supporting on a support surface (16),
**characterized in that**
the underside (22) of the foot plate facing the support surface is formed as a sliding surface for a sliding device mounted on the underside, with the swivel foot being movable relative to the support surface.

2. The swivel foot according to Claim 1,
**characterized in that**
the sliding device is formed from a band arrangement (31) lying against the underside (22) of the foot plate (15) and arranged displaceably thereon.

3. The swivel foot according to Claim 2,
**characterized in that**
the band arrangement (31) is formed so as to be endless and is guided over at least two deflection arrangements (33, 34; 36, 37).

4. The swivel foot according to Claim 3,
**characterized in that**
the deflection arrangements are formed on the foot plate.

5. The swivel foot according to Claim 3,
**characterized in that**
the deflection arrangements (33, 34; 36, 37) are formed independently of the foot plate (15).

6. The swivel foot according to any of the preceding claims 2 to 5,
**characterized in that**
the band arrangement is provided with a brake- and/or stop arrangement to inhibit or prevent a band movement.

7. The swivel foot according to any of the preceding claims 2 to 6,
**characterized in that**
the foot plate (15) forms a lower housing part of a housing (19) to receive the band arrangement (31).

8. The swivel foot according to Claim 7,
**characterized in that**
the foot plate (15) is provided with an upper housing part (20) which is formed in a connecting region for connection to the support tube (12) as a counter bearing surface (27) to a bearing surface (28) formed in a complementary manner on the support tube.

9. The swivel foot according to Claim 8,
**characterized in that**
the counter bearing surface (27) formed on the upper housing part (20) is formed as a partial face of a spherical surface.

## Revendications

1. Pied pivotant pour supporter un dispositif de support ou de levage (10), notamment d'un support de remorque ou similaire, avec un système de palier pivotant (13) destiné à être relié à un tube de support (12) du dispositif de support ou de levage et avec une plaque d'assise (15) pour s'appuyer sur une base (16),
**caractérisé en ce que**,
la face inférieure (22) dirigée vers la base de la plaque d'assise est conçue sous la forme d'une surface de coulissement pour un dispositif de coulissement disposé sur la face inférieure, le pied pivotant étant mobile par rapport à la base.

2. Pied pivotant selon la revendication 1,
**caractérisé en ce que**,
le dispositif de coulissement est formé d'un dispositif de bande (31) adjacent à la face inférieure (22) de la plaque d'assise (15) et disposé de façon déplaçable sur cette dernière.

3. Pied pivotant selon la revendication 2,
**caractérisé en ce que**,
le dispositif de bande (31) est conçu sans fin et est guidé sur au moins deux dispositifs de renvoi (33, 34 ; 36, 37).

4. Pied pivotant selon la revendication 3,
**caractérisé en ce que**,
les dispositifs de renvoi sont conçus sur la plaque d'assise.

5. Pied pivotant selon la revendication 3,
**caractérisé en ce que**,
les dispositifs de renvoi (33, 34; 36, 37) sont conçus indépendamment de la plaque d'assise (15).

6. Pied pivotant selon l'une quelconque des revendications précédentes 2 à 5,
**caractérisé en ce que**,
le dispositif de bande est muni d'un système de freinage et/ou de butée, pour inhiber ou pour empêcher un déplacement de la bande.

7. Pied pivotant selon l'une quelconque des revendications précédentes 2 à 6,
**caractérisé en ce que**,
la plaque d'assise (15) forme une partie inférieure d'un boîtier (19) pour recevoir le dispositif de bande (31).

8. Pied pivotant selon la revendication 7,
**caractérisé en ce que**,
la plaque d'assise (15) est munie d'une partie supérieure de boîtier (20), qui dans une zone de liaison pour le raccord sur le tube de support (12) est conçue sous la forme d'une contre-surface de portée (27) pour une surface de portée (28) conçue sous forme complémentaire sur le tube de support.

9. Pied pivotant selon la revendication 8,
**caractérisé en ce que**,
la contre-surface de portée (27) conçue sur la partie supérieure de boîtier (20) est conçue sous la forme d'une surface partielle d'une surface sphérique.
